# EUROPEAN PATENT APPLICATION

(11) **EP 2 535 633 A1**
(43) Date of publication of application: **19.12.2012**
(21) Application number: 10709787.5
(22) Date of filing: 08.02.2010
(51) Int. Cl.: F16N 39/04

(54) **LUBRICATING OIL HEATING MECHANISM, GEAR MECHANISM, AND WIND POWER GENERATION DEVICE**

(71) Applicant: Mitsubishi Heavy Industries, Ltd., Tokyo 108-8215 (JP)
(72) Inventor: TAKAYANAGI, Kazufumi, Tokyo 108-8215 (JP)
(74) Representative: Intès, Didier Gérard André
(86) International application number: PCT/JP2010/051769
(87) International publication number: WO 2011/096076

(57) **Abstract**

A lubricant heating mechanism is provided with a tank accumulating therein lubricant; a lubricant pump; a heater provided in the tank to heat the lubricant; and a baffle plate at least partially covering the heater. The tank is provided with a suction port drawing out the lubricant from the tank to the lubricant pump. The baffle plate is provided to convect the heated lubricant toward the suction port.

## Description

### Technical Field

The present invention relates to a lubricant heating mechanism, a gear mechanism, and a wind turbine generator using the same, and more particularly, to a heating mechanism for heating lubricant when an equipment is started in an extremely cold environment.

### Background Art

There arises a necessity to heat lubricant, when a wind turbine generator or other equipment is used in an extremely cold environment. The viscosity of the lubricant increases in an extremely cold environment, and an excessively increase in the viscosity of the lubricant enhances the load of a lubricant circulation pump, and may cause malfunction of the circulation pump. To address this, the lubricant is heated by a heater, when the temperature of the lubricant is low. For example, US Patent Application Publication No. 2009/0191060 A1 (Patent Document 1) discloses a technique for providing a heater in an exhaust pipe which evacuates lubricant from a gearbox to a pump.

One problem is that it takes a long time to reheat the lubricant in an equipment tank when the equipment stops operating in an extremely cold environment. In an equipment used in an extremely cold environment, a heater is provided in a lubricant tank to heat lubricant; however, the viscosity of the lubricant increases when the lubricant accumulated in the equipment tank is cooled after the machine stops operating in the extremely cold environment. Occurrence of convection is suppressed in the cooled lubricant, which has a high viscosity; convection occurs to the lubricant right on the heater and the lubricant right on the heater is promptly heated, while no convection occurs laterally and below the heater and the lubricant lateral of and below the heater is difficult to be heated.

Particularly, this problem is serious when a suction port drawing out the lubricant from the equipment tank into a lubricant pump is positioned laterally of the heater because of the equipment layout. It takes long time to restart the lubricant pump, since the lubricant near the suction port is not heated.

### Citation List

### Patent Literature

Patent Document 1: US Patent Application Publication No. US 2009/0191060 A1

### Summary of Invention

It is, therefore, an object of the present invention to provide a lubricant heating mechanism capable of reducing time necessary to restart a lubricant pump after the lubricant in an equipment tank is cooled, and a wind turbine generator using such lubricant heating mechanism.

In an aspect of the present invention, a lubricant heating mechanism is provided with: a tank accumulating therein lubricant; a lubricant pump; a heater provided in the tank to heat the lubricant; and a baffle plate at least partially covering the heater. The tank is provided with a suction port drawing out the lubricant from the tank to the lubricant pump. The baffle plate is provided to convect the heated lubricant toward the suction port.

When the lubricant heating mechanism further includes a gear, it is preferable that the baffle plate is provided to cover a lower portion of the gear and to function as an oil pan holding the lubricant near the gear.

The baffle plate is preferably provided away from a sidewall of the tank, the sidewall having the suction port provided thereon.

In another aspect of the present invention, a lubricant heating mechanism is provided with: a tank accumulating therein lubricant; a lubricant pump; and a heater provided in said tank to heat said lubricant. The tank is provided with a suction port drawing out the lubricant from the tank to the lubricant pump, the suction port being provided laterally of the heater. The lubricant located near the suction port is heated faster than the lubricant near a portion above the heater on a liquid surface of the lubricant.

In still another aspect of the present invention, a gear mechanism is provided with a tank portion accumulating therein lubricant; a gear; an oil pan provided to cover a lower portion of the gear to hold the lubricant near the gear; and a heater provided in the tank portion to heat the lubricant. The tank is provided with a suction port drawing out the lubricant from the tank to a lubricant pump. The oil pan covers the heater at least partially and functions as a baffle plate convecting the heated lubricant toward the suction port.

In still another aspect of the present invention, a wind turbine generator is provided with: a main shaft supporting a wind turbine rotor and provided rotatably; a gear box having an input shaft connected to the main shaft; and a generator connected to an output shaft of the gear box. The gear box includes: a housing including a tank portion accumulating therein lubricant; a gear provided inside the housing; an oil pan provided to cover a lower portion of the gear, and holding the lubricant near the gear; and a heater provided in the tank portion. The housing is provided with a suction port drawing out the lubricant from the tank portion to a lubricant pump. The oil pan covers the heater at least partially and functions as a baffle plate convecting the lubricant toward the suction port.

### Brief Description of Drawings

Fig. 1 is a conceptual diagram showing a configuration of a lubricant circulation system provided with a lubricant heating mechanism in one embodiment of the present invention;
Fig. 2A is a diagram showing the behavior of heated lubricant in an equipment tank with a baffle plate;
Fig. 2B is a diagram showing the behavior of heated lubricant in an equipment tank without a baffle plate;
Fig. 3 is a side view of a wind turbine generator in one embodiment of the present invention;
Fig. 4 is a top view showing an internal structure of a nacelle of the wind turbine generator in one embodiment;
Fig. 5 is a cross-sectional view showing a structure of a gear box in one embodiment;
Fig. 6 is a perspective view showing a structure of a tank portion of the gear box shown in Fig. 5; and
Fig. 7 is a cross-sectional view showing the structure of the tank portion of the gear box shown in Fig. 5.

### Description of Embodiments

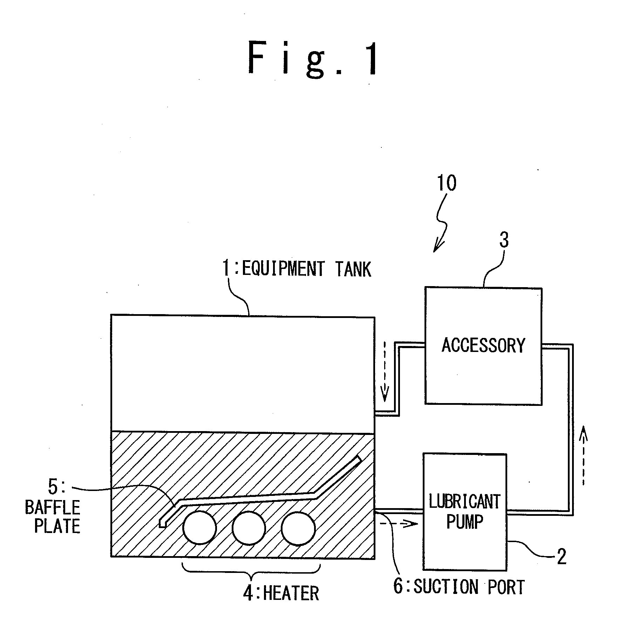

Fig. 1 is a conceptual diagram showing the configuration of a lubricant circulation system 10 provided with a lubricant heating mechanism in one embodiment of the present invention. In this embodiment, the lubricant circulation system 10 includes an equipment tank 1, a lubricant pump 2, and an accessory 3. The equipment tank 1 is a tank provided in equipment (such as a gearbox) or the like to accumulate lubricant therein. The lubricant pump 2 draws out the lubricant in the equipment tank 1 from a suction port 6 and feeds the lubricant to the accessory 3. The accessory 3, which includes a lubricant filter, a lubricant cooler and the like, performs necessary treatment on the lubricant and feeds the lubricant to the equipment. The lubricant used in various parts of the equipment is collected in the equipment tank 1. It is preferable that heaters (not shown) are provided for respective pipes connecting the equipment tank 1, the lubricant pump 2, and the accessory 3, so as to prevent cooling of the lubricant in the equipment tank 1, the lubricant pump 2, and the accessory 3.

A heater 4 for heating the lubricant is provided inside the equipment tank 1. The heater 4 is used to heat the lubricant when the temperature of the lubricant inside the equipment tank 1 is low. The viscosity of the lubricant increases, when the equipment stops operating in an extremely cold state and the temperature of the lubricant falls. The lubricant pump 2 cannot operate when the viscosity of the lubricant is excessively increased. To address this, the lubricant pump 2 is started after the heater 4 sufficiently heats the lubricant, at the time of restarting the equipment.

In this embodiment, a baffle plate 5 for controlling the convection of the lubricant is provided above the heater 4. The baffle plate 5 is shaped and located to convect the lubricant toward the suction port 6. This baffle plate 5 contributes to efficiently heat the lubricant in the region necessary for starting and to promptly restart the lubricant pump 2. There is no need to heat the lubricant entirely in starting the lubricant pump 2; it is actually the lubricant near the suction port 6 that is necessary to be heated. Therefore, in this embodiment, the baffle plate 5 is provided to thereby promptly heat the lubricant near the suction port 6; this allows promptly starting the lubricant pump 2. The function of the baffle plate 5 will be described below in detail.

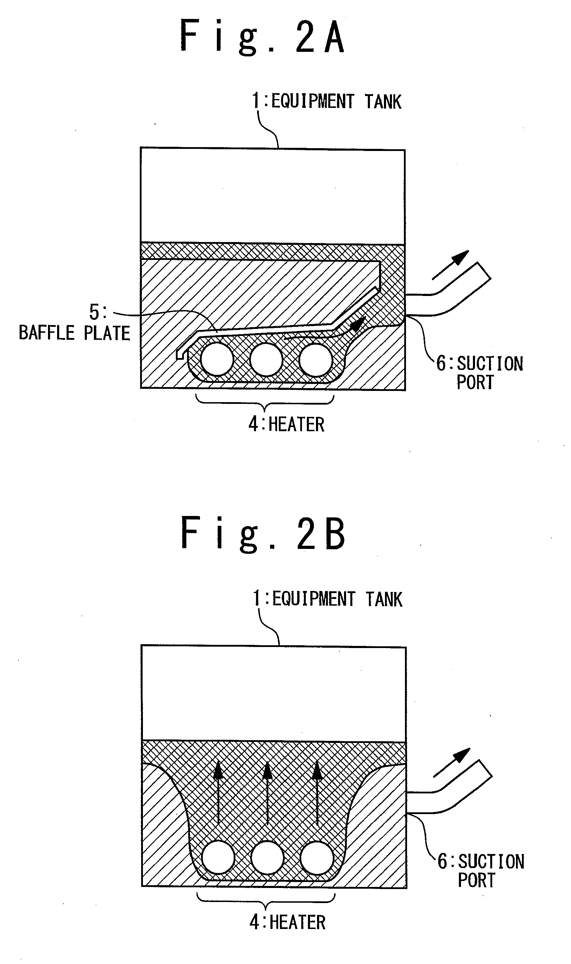

Figs. 2A and 2B are diagrams for showing the function of the baffle plate 5. Fig. 2A shows the behavior of the heated lubricant for the case when the baffle plate 5 is provided. Fig. 2B is a diagram showing the behavior of the heated lubricant for the case when the baffle plate 5 is not provided. In Figs. 2A and 2B, a deep hatched portion indicates a portion in which the lubricant is heated to reduce the viscosity thereof. A light hatched portion indicates a portion in which the lubricant has a low temperature and low viscosity.

As shown in Fig. 2B, the heated lubricant convects only upward of the heater 4 for the case when the baffle plate 5 is not provided. This results in that the lubricant lateral of the heater 4 is heated only slowly, while the lubricant upward of the heater 4 is promptly heated. In an arrangement in which the suction port 6 is provided laterally of the heater 4, it takes long time to heat the lubricant near the suction port 6, resulting in that it takes long time to be ready to start the lubricant pump 2.

In this embodiment, as shown in Fig. 2B, the baffle plate 5 directs the convection of the heated lubricant oil toward the suction port 6, and this allows promptly heating the lubricant near the suction port 6. More specifically, the lubricant near the suction port 6 is heated faster than the lubricant near a portion above the heater 4 on the liquid surface of the lubricant. Since the lubricant near the suction port 6 is promptly heated, it is possible to promptly start the lubricant pump 2.

The shape and position of the baffle plate 5 may be variously changed. For example, although the baffle plate 5 is shaped and located to completely cover up the upper portion of the heater 4 in Fig. 2A, the baffle plate 5 does not necessarily cover the heater 4 completely. It should be noted, however, that it is preferable that the baffle plate 5 covers the heater 4 so as to accelerate the heating of the lubricant near the suction port 6.

As shown in Fig. 2A, the baffle plate 5 is preferably disposed slightly away from the sidewall on which the suction port 6 of the equipment tank 1 is provided. This aims to suppress the degree of preventing circulation of the lubricant after starting the lubricant pump 2. If the baffle plate 5 is attached directly to the sidewall of the equipment tank 1, the lubricant returning from upward of the equipment tank 1 is prevented from returning to the suction port 6. As shown in Fig. 2A, the degree of preventing circulation of the lubricant is suppressed by providing the baffle plate 5 slightly away from the sidewall of the equipment tank 1.

The structure of the lubricant heating mechanism stated above is suited to be applied to various mechanisms in a wind turbine generator used in a cold region, particularly suited to be applied to a gear box. The structure of the gear box to which the lubricant heating mechanism according to the present invention is applied will be described below.

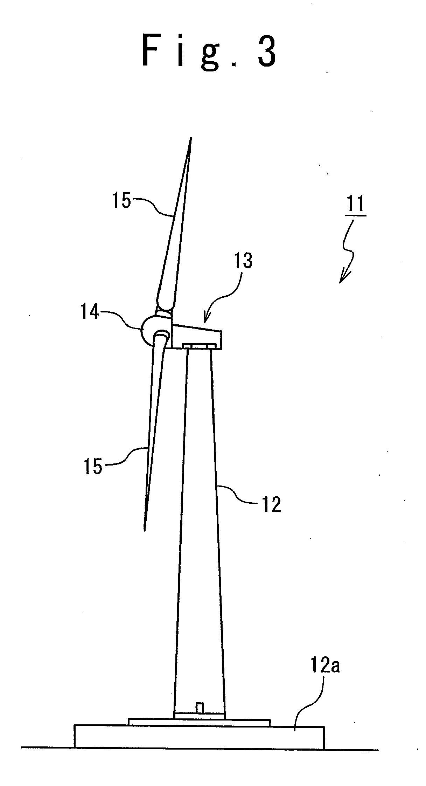

Fig. 3 is a side view showing the configuration of a wind turbine generator 11 in one embodiment of the present invention. The wind turbine generator 11 includes a tower 12 built on a base 12a, a nacelle 13 disposed on the top of the tower 12, a rotor head 14 rotatably attached to the nacelle 13, and wind turbine blades 15 attached to the rotor head 14. The rotor head 14 and the wind turbine blades 15 constitute a wind turbine rotor.

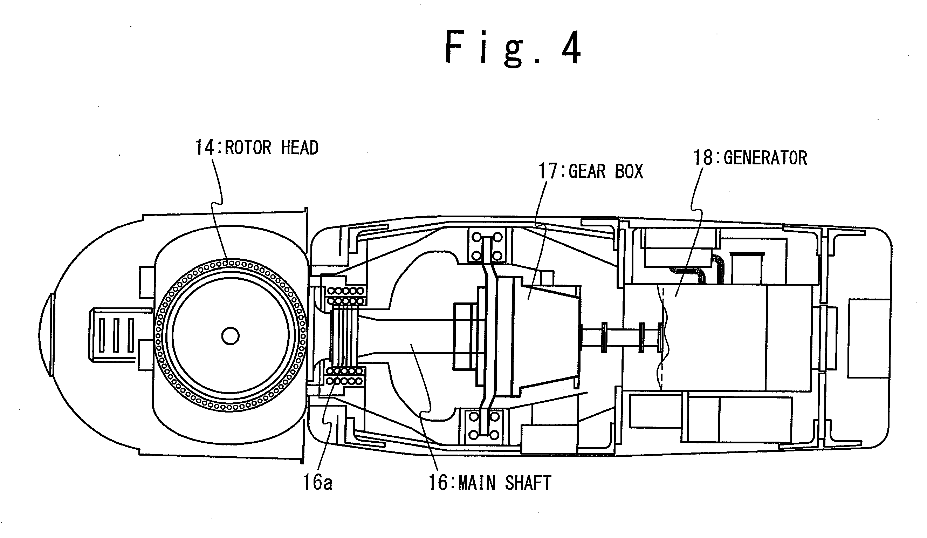

As shown in Fig. 4, one end of a main shaft 16 is connected to the rotor head 14 and the main shaft 16 is rotatably supported by a main shaft bearing 16a. The other end of the main shaft 16 is connected to the input shaft of a gear box 17. The output shaft of the gear box 17 is connected to a rotor of a generator 18. When the rotor head 14 is rotated by wind power, the gear box 17 accelerates the rotation of the rotor head 14 and the accelerated rotation is transmitted to the rotor of the generator 18 to drive the generator 18. As a result, electric power is obtained from the generator 18.

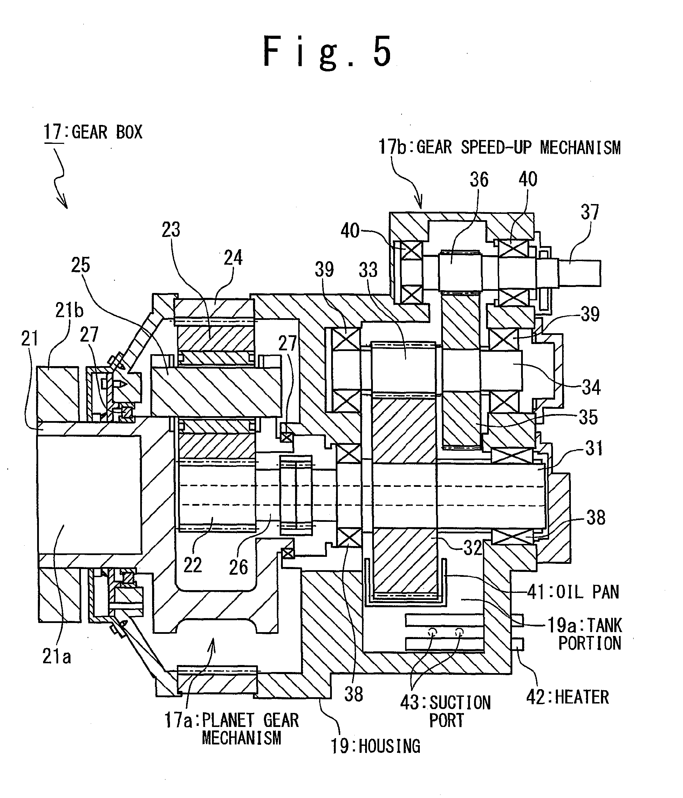

Fig. 5 is a cross-sectional view showing the structure of the gear box 17 in this embodiment. The gear box 17 includes a planet gear mechanism 17a, a gear speed-up mechanism 17b, and a housing 19 accommodating therein the planet gear mechanism 17a and the gear speed-up mechanism 17b. The planet gear mechanism 17a includes an input shaft 21, a sun gear 22, a plurality of planet gears 23 (one shown in Fig. 5), an internal gear 24, a plurality of planet pins 25 (one shown in Fig. 5), and a sun gear shaft 26. The input shaft 21 has an insertion hole 21a into which the main shaft 16 is inserted. The main shaft 16 is coupled to the input shaft 21 by fastening a shrink fit 21b with main shaft 16 inserted into the insertion hole 21a. The shrink fit 21b is an annular mechanical element configured so that the inside diameter can be reduced by an external driving force. The shrink fit 21b is configured to be fastened by, for example, a bolt provided on the shrink fit 21b or hydraulic pressure. The input shaft 21A is rotatably supported by a bearing 27 provided on the housing 19. The input shaft 21 also functions as a carrier which supports the planet gears 23 in the planet gear mechanism 17a. The planet gears 23 are located between the sun gear 22 and the internal gear 24, and connected to the input shaft 21 by the plant pins 25 inserted into the planet gears 23, respectively. The sun gear shaft 26 is connected to the sun gear 22 and used as an output shaft of the planet gear mechanism 17a. When the input shaft 21 is rotated, the rotation of the input shaft 26 is transmitted to the sun gear 22 via the planet gears 23, and the sun gear shaft 26 connected to the sun gear 22 is acceleratedly rotated.

The gear speed-up mechanism 17b includes a first rotational shaft 31 connected to the sun gear shaft 26, a first spur gear 32 connected to the first rotational shaft 31, a second spur gear 33, a second rotational shaft 34 connected to the second spur gear 33, a third spur gear 35 connected to the second rotational shaft 34, a fourth spur gear 36, and an output shaft 37 connected to the fourth spur gear 35. The first rotational shaft 31, the second rotational shaft 34, and the output shaft 37 are rotatably supported by bearings 38, 39, and 40 provided in the housing 19, respectively. Further, the first spur gear 32 is engaged with the second spur gear 33, and the third spur gear 35 is engaged with the fourth spur gear 36. In the gear speed-up mechanism 17b thus structured, when the sun gear shaft 26 is rotated, the rotation of the sun gear shaft 26 is transmitted to the first spur gear 32, the second spur gear 33, the third spur gear 35, and the fourth spur gear 36, and the output shaft 37 connected to the fourth spur gear 36 are acceleratedly rotated. That is, as a whole of the gear box 17, when the input shaft 21 is rotated, the rotation of the input shaft 21 is accelerated by the planet gear mechanism 17a and the gear speed-up mechanism 17b and the accelerated rotation is outputted from the output shaft 37.

An oil pan 41 is provided to cover the lower portion of the second spur gear 33. This oil pan 41 functions to hold the lubricant of an appropriate amount below the second spur gear 33 and to thereby reduce the agitation loss of the lubricant in the rotation of the second spur gear 33.

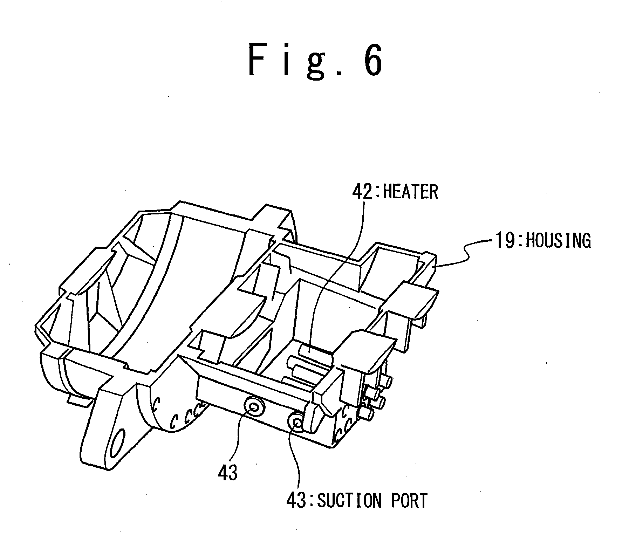

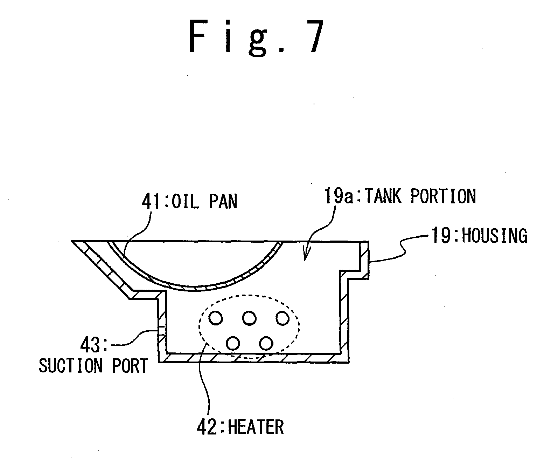

A space is provided inside the housing 19 below the oil pan 41, and this space functions as a tank portion 19a that accumulates therein the lubricant (also see Figs. 6 and 7). Heaters 42 heating the lubricant are provided in the tank portion 19. Suction ports 43 are also provided on the tank portion 19a at positions lateral of the heater 42, respectively. The lubricant accumulated in the tank portion 19a is drawn out from the suction ports 43 by the lubricant pump, passes through the lubricant pump and the accessory, and returns into the housing 19. The configuration shown in Fig. 1 is applied to the configuration of the lubricant circulation system circulating the lubricant.

In the structure of the gear box 17 shown in Figs. 5 to 7, the oil pan 41 also functions as a baffle plate for the convection of the heated lubricant. That is, the presence of the oil pan 41 directs the convection of the heated lubricant toward the suction ports 43, so that the lubricant near the suction ports 43 is promptly heated. This allows promptly starting the lubricant pump connected to the suction ports 43.

Although the configuration is shown in which the oil pan 41 provided below the second spur gear 33 of the gear box 17 also functions as the baffle plate controlling the convection of the lubricant, the configuration of using the oil pan provided below the gear as the baffle plate is applicable to other gear mechanisms. Alternatively, the baffle plate controlling the convection of the lubricant may be provided separately from the oil pan 41.

## Claims

1. A lubricant heating mechanism, comprising:
a tank accumulating therein lubricant;
a lubricant pump;
a heater provided in said tank to heat said lubricant; and
a baffle plate at least partially covering said heater,
wherein said tank is provided with a suction port drawing out said lubricant from said tank to said lubricant pump, and
said baffle plate is provided to convect the heated lubricant toward the suction port.

2. The lubricant heating mechanism according to claim 1, further comprising a gear,
wherein said baffle plate is provided to cover a lower portion of said gear and to function as an oil pan holding said lubricant near said gear.

3. The lubricant heating mechanism according to claim 1 or 2, wherein said suction port is provided through a sidewall of said tank, and
said baffle plate is provided away from said sidewall.

4. A lubricant heating mechanism comprising:
a tank accumulating therein lubricant;
a lubricant pump; and
a heater provided in said tank to heat said lubricant,
wherein said tank is provided with a suction port drawing out said lubricant from said tank to said lubricant pump, said suction port being provided laterally of said heater, and
lubricant located near said suction port is heated faster than lubricant near a portion above said heater on a liquid surface of said lubricant.

5. A gear mechanism, comprising:
a tank portion accumulating therein lubricant;
a gear;
an oil pan provided to cover a lower portion of said gear to hold said lubricant near said gear; and
a heater provided in said tank portion to heat said lubricant,
wherein said tank is provided with a suction port drawing out said lubricant from said tank to a lubricant pump, and
said oil pan covers said heater at least partially and functions as a baffle plate convecting said heated lubricant toward said suction port.

6. A wind turbine generator, comprising:
a main shaft supporting a wind turbine rotor and provided rotatably;
a gear box having an input shaft connected to said main shaft; and
a generator connected to an output shaft of said gear box,
wherein said gear box includes:
a housing including a tank portion accumulating therein lubricant;
a gear provided inside said housing;
an oil pan provided to cover a lower portion of said gear, and holding said lubricant near said gear; and
a heater provided in said tank portion,
wherein said housing is provided with a suction port drawing out said lubricant from said tank portion to a lubricant pump, and
said oil pan covers said heater at least partially and functions as a baffle plate convecting said lubricant toward said suction port.
